# EUROPEAN PATENT SPECIFICATION

(11) **EP 2 244 534 B1**
(45) Date of publication and mention of the grant of the patent: **09.01.2019**
(21) Application number: 09014678.8
(22) Date of filing: 25.11.2009
(51) Int. Cl.: H05B 41/04, H05B 41/288, H05B 41/292, H05B 41/38

(54) **High pressure discharge lamp lighting device, illumination fixture and illumination system**
Beleuchtungsvorrichtung mit Hochdruckentladungslampe, Beleuchtungsbefestigung und Beleuchtungssystem
Dispositif d'éclairage de lampe à décharge haute pression, appareil d'éclairage et système d'éclairage

(30) Priority: 25.11.2008 JP 2008300154
(43) Date of publication of application: 27.10.2010
(73) Proprietor: Panasonic Intellectual Property Management Co., Ltd., Osaka-shi, Osaka 540-6207 (JP)
(72) Inventor: Yufuku, Hyogo 670-0966 (JP); Kamoi, Takeshi, Kyoto 512-8081 (JP)
(74) Representative: Rüger Abel

(56) References cited:
- WO-A1-02/077739
- WO-A2-2008/132662
- JP-A- 2007 026 830

## Description

### [Field of the Invention]

The present invention relates to a high pressure discharge lamp lighting device for use in turning on a high-pressure discharge lamp, an illumination fixture using the high pressure discharge lamp lighting device, and an illumination system using the illumination fixture.

### [Background Art]

WO 02/077739 A1 discloses a high-pressure discharge lamp lighting device according to the preamble of claim 1. For igniting a discharge lamp, high voltage impulses are applied to the lamp during a sequence of a first period of time followed by a second period of time where no high voltage impulses are created. If a repeated sequence of the first and second periods of time does not ignite the lamp, a waiting time is introduced before the sequence is repeated.

WO 2008/132662 A2 refers to a high-pressure discharge lamp lighting device in which re-ignition of the discharge lamp after extinction is carried out by creating high frequency pulses during a first period of time and low frequency pulses during a second period of time following the first period of time.

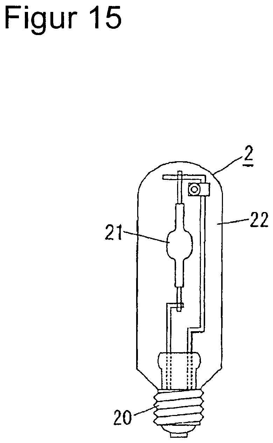

Conventionally, a high-pressure discharge lamp has been widely used as a light source for illumination with high luminance and high light output. A high-pressure discharge lamp 2 shown in Fig. 15 is brought into a stable lighting state by gradually increasing a temperature/pressure in an arc tube 21 from the time of activation. Here, if the high-pressure discharge lamp in a stable lighting state is lighted out, an extremely high temperature/pressure in the arc tube 21 will cause a sharp rise of a dielectric breakdown voltage from a load voltage of approximately 100V as observed at the time of the stable lighting to several tens of kV in a short period of time. Accordingly, it is necessary to apply a voltage of several tens of kV to the high-pressure discharge lamp in order to immediately light on the high-pressure discharge lamp again after it was lighted out from a stable lighting state.

However, applying a voltage of several tens of kV to the high-pressure discharge lamp 2 as shown in Fig. 15 will result in having a dielectric breakdown in the vicinity of an Edison base 20 with no application of a voltage required for the arc tube 21. This phenomenon is particularly remarkable in the high-pressure discharge lamp 2 containing metal iodide, wherein a high voltage for activation causes iodide to be scattered and deposited around a tube wall in the periphery of electrodes, thereby resulting in creating a path along the tube wall to allow discharge easily and causing discharge along the discharge path.

Usually, iodide is evaporated as the temperature/pressure in the arc tube 21 covered by an outer tube 22 is increased due to the continuous discharge, and the high-pressure discharge lamp 2 will move onto a stable lighting state. However, if the high-pressure discharge lamp 2 is lighted out after having been lighted on for a short period of time prior to an evaporation of iodide, an unstable state is maintained in the arc tube 21 of the high-pressure discharge lamp 2 with an attempt to gradually return to an initial state gradually. Such an unstable state is accompanied by an increased activation voltage in the high-pressure discharge lamp 2, wherein continuous glow discharge and a high voltage for activation allow an activation, however, electrons which constitute discharge is consumed by iodide and the lighting is went out, thereby requiring a longer period of time for activation than that in usual activation. Moreover, in a high pressure discharge lamp lighting device set to stop an activation operation in response to continuous abnormal discharge, a high-pressure discharge lamp is not lighted on. As a result, if, for example, in the case of lighting out after having been lighted on for a short period of time to confirm the lighting in illumination implementation, a phenomenon such as no reactivation thereafter is observed.

A conventional high-pressure discharge lamp is designed to apply a dielectric breakdown voltage (for example, approximately 4kV) to the high-pressure discharge lamp 2 in a sufficiently cooled state at the time of activation. Therefore, if the high-pressure discharge lamp 2 is lighted out after having been lighted on for a short period of time to reach a stable lighting state, it is impossible for a conventional high pressure discharge lamp lighting device to immediately light on the high-pressure discharge lamp 2 again even with an immediately started activation operation, because the high-pressure discharge lamp 2 is hardly activated due to a high dielectric breakdown voltage in the high-pressure discharge lamp 2. When the temperature is lowered to cause a decrease of a dielectric breakdown voltage to the level of a high voltage for activation generated by the high pressure discharge lamp lighting device or less, the conventional high-pressure discharge lamp can reactivate the high-pressure discharge lamp 2. It is assumed to take approximately 10 minutes for reactivation though depending on the type of the high-pressure discharge lamp 2, a fixture structure and an installation state. During the reactivation, the high pressure discharge lamp lighting device repeatedly generates an intermittent high voltage pulse for activation. The reason why a high voltage pulse for activation is generated intermittently is to shorten a period of time required to achieve reactivation by setting a period to cool down the high-pressure discharge lamp 2.

Patent Document 1 discloses a high pressure discharge lamp lighting device provided with a power supply part for supplying power to a high-pressure discharge lamp, activation high voltage generating adapted to supply a high voltage for activation, current detecting adapted to detect a current supplied to the high-pressure discharge lamp, and a monitoring control part for controlling the power supply part and the activation high voltage generating means by monitoring a lighting state of the high-pressure discharge lamp. In the high pressure discharge lamp lighting device according to Patent Document 1, the monitoring control part drives, at activation, the activation high voltage generating means and monitors an activation state by an output from the current detection means. In the case of an activation failure, the monitoring control part drives the activation high voltage generating means again to repeat the sequence of operations to monitor an activation state by an output from the current detection means until reaching a predetermined number of times. If the activation failure is continued to reach the predetermined number of times, the monitoring control part stops driving the activation high voltage generating means and stops power supply by the power supply part. It is therefore achieved to reduce impairment and a danger of an electric shock in the high pressure discharge lamp lighting device caused by a high voltage generated for a long period of time.

Patent Document 2 also discloses a high pressure discharge lamp lighting device for preventing generation of discharge in an outer tube if a high-pressure discharge lamp in a stable lighting state is turned off with an increased dielectric breakdown voltage. If the high-pressure discharge lamp in a stable lighting state is lighted out with a dielectric breakdown voltage increased and a high voltage for activation applied thereto immediately, discharge may possibly occur in an outer shell of an arc tube which allows discharge more easily or in an outer tube. In the high pressure discharge lamp lighting device according to Patent Document 2, if the temperature of the high-pressure discharge lamp is increased and the lighting is went out after having been turned on for a predetermined period of time to achieve stable lighting of the high-pressure discharge lamp, pulse application starts after a predetermined stop period. In contrast, if the high-pressure discharge lamp is went out before passing a predetermined period of time (for example, 10 minutes) to stabilize the temperature of the high-pressure discharge lamp which was lighted on, the high pressure discharge lamp lighting device performs a control so as to start pulse application immediately. Therefore, stable lighting is followed by an increased dielectric breakdown voltage to suppress unnecessary generation of a high voltage in a time zone in which reactivation is unachievable by a high voltage for activation, so that discharge can be reduced in an outer tube.

Patent Document 3 further discloses a high pressure discharge lamp lighting device provided with first time counting adapted to count lighting time of a high-pressure discharge lamp, conversion adapted to convert the counted lighting time into pulse waiting time TW in accordance with a fixed conversion ratio established in advance, second time counting adapted to counting elapsed time TP from cutting off a power source to supplying the power source again, comparison adapted to compare the pulse waiting time TW to the elapsed time TP, and output control adapted to cause an activation voltage generating circuit to operate immediately if TW is equal to or less than TP and causes the activation voltage generating circuit to operate after passing a period of time (TW - TP) if TW is larger than TP. The high pressure discharge lamp lighting device according to Patent Document 3 determines a period of time required to reach a state of allowing instant reactivation of the high-pressure discharge lamp from a state in supplying the power source on the basis of a predetermined characteristic, followed by, in accordance with the determination result, performing a control to apply a high-pressure pulse immediately and a control to apply a high-pressure pulse after passing a predetermined period of time.

As mentioned above, the conventional high pressure discharge lamp lighting device repeatedly attempts an activation operation established in advance.
[Patent Document 1] Japanese Patent No. 2778257
[Patent Document 2] Japanese Unexamined Patent Publication No. 2005-285434
[Patent Document 3] Japanese Unexamined Patent Publication No. 1994-260289

### [Disclosure of the Invention]

### [Problems to be solved by the Invention]

However, a high-pressure discharge lamp which is lighted out prior to achieve stable lighting can be brought into various kinds of states which differ from an initial activation state, and it is therefore not necessarily activated even if a high pressure discharge lamp lighting device repeats a fixed activation operation established in advance.

The present invention was achieved by taking the above problems into consideration, having an object to provide a high pressure discharge lamp lighting device, an illumination fixture and an illumination system wherein a high-pressure discharge lamp can be easily activated even if the high-pressure discharge lamp is turned off prior to achieve stable lighting and brought into various kinds of states.

### [Means adapted to solve the Problems]

A high pressure discharge lamp lighting device according to a first aspect of the present invention includes a power supply circuit for supplying AC power to a high-pressure discharge lamp, an activation voltage generating circuit for activating the high-pressure discharge lamp by repeatedly supplying a high-voltage pulse for activation to the high-pressure discharge lamp, pulse control adapted to alternately perform, in a non-lighting state of the high-pressure discharge lamp, with respect to the activation voltage generating circuit, a control to continuously repeat the high-voltage pulse for activation only for a first period of time and a control to stop repeating the high-voltage pulse for activation only for a second period of time, and abnormality detection adapted to detect an abnormal lighting state of the high-pressure discharge lamp, wherein the pulse control means changes a ratio of time occupied by the second period of time relative to the first period of time if the abnormality detection means detects an abnormal lighting state of the high-pressure discharge lamp and a circumstance of having the abnormal lighting state corresponds to a predetermined circumstance.

The pulse control means makes a ratio of time occupied by the second period of time relative to the fist period of time larger than that obtained before the detection if the circumstance of having the abnormal lighting state corresponds to the predetermined circumstance.

According to the invention the pulse control means makes the ratio of time larger than that obtained before the detection by making the first period of time shorter than that obtained before the detection if the circumstance of having the abnormal lighting state corresponds to the predetermined circumstance.

A high pressure discharge lamp lighting device according to a second aspect of the present inventiona second period of time obtained after changing the ratio of time is longer than a period of time required to reactivate a high-pressure discharge lamp in a lighted out state after achieving stable lighting of the high-pressure discharge lamp.

A high pressure discharge lamp lighting device according to a third aspect of the present invention is based on any one of the first or second aspect of the present invention, wherein the abnormality detection means detects an abnormal lighting state of a high-pressure discharge lamp by detecting half-wave discharge.

A high pressure discharge lamp lighting device according to a forth aspect of the present invention is based on any one of the first or second aspect of the present invention, wherein the abnormality detection means detects an abnormal lighting state of a high-pressure discharge lamp by detecting a lighted out state with the lighting turned off after achieving a lighting state of the high-pressure discharge lamp once.

A high pressure discharge lamp lighting device according to a fifth aspect of the present invention is based on any one of the first or second aspect of the present invention, wherein the abnormality detection means detects an abnormal lighting state of a high-pressure discharge lamp by detecting a non-lighting state of the high-pressure discharge lamp.

A high pressure discharge lamp lighting device according to a sixth aspect of the present invention is based on any one of the first to fifth aspects of the present invention, wherein the pulse control means controls the activation voltage generating circuit so as to stop repeating the high-voltage pulse for activation if the abnormality detection means detects an abnormal lighting state of a high-pressure discharge lamp after making the ratio of time larger than that obtained before the detection.

An illumination fixture according to a seventh aspect of the present invention includes the high pressure discharge lamp lighting device according to any one of the first to sixth aspects of the present invention, a fixture main body for mounting the high pressure discharge lamp lighting device, and a high-pressure discharge lamp with power supplied from the high pressure discharge lamp lighting device.

An illumination system according to an eighth aspect of the present invention includes a plurality of the illumination fixtures according to the seventh aspect of the present invention and a control device for controlling each of the illumination fixtures.

### [Effect of the Invention]

According to the the present invention, if an activation voltage applied to the high-pressure discharge lamp fluctuates in activating the high-pressure discharge lamp, a ratio of time occupied by a period of time to stop repeating the high-voltage pulse for activation (second period of time) relative to a period of time to repeat the high-voltage pulse for activation (first period of time) is changed to allow easier activation of the high-pressure discharge lamp.

According to the present invention, even if the high-pressure discharge lamp has a high temperature with an increased activation voltage (dielectric breakdown voltage) applied to the high-pressure discharge lamp in activating the high-pressure discharge lamp, and in the case of having a fluctuating activation voltage for the high-pressure discharge lamp, a ratio of time occupied by a period of time to stop repeating the high-voltage pulse for activation (second period of time) relative to a period of time to repeat the high-voltage pulse for activation (first period of time) is made larger to decrease a temperature of the high-pressure discharge lamp and realize a lower activation voltage, whereby activation of the high-pressure discharge lamp can be made easier.

According to the present invention, a period of time during which the high-pressure discharge lamp generates heat can be shortened by making a period of time to repeat the high-voltage pulse for activation shorter, and a temperature of the high-pressure discharge lamp can be reduced in a short period of time, whereby the high-pressure discharge lamp can be activated easily in a short period of time.

According to the present invention, a sufficient cooling period of time can be established for the high-pressure discharge lamp by extending a period of time to stop repeating a high-voltage pulse for activation, whereby activation of the high-pressure discharge lamp can be made easier.

According to the second aspect of the present invention, even if the high-pressure discharge lamp has a high activation voltage, it can be sufficiently cooled down to realize a lower activation voltage for the high-pressure discharge lamp, whereby activation of the high-pressure discharge lamp can be ensured.

According to the third aspect of the present invention, even if half-wave discharge is continued in reactivating the high-pressure discharge lamp after the high-pressure discharge lamp is lighted on for a short period of time, a cooling period can be established for the high-pressure discharge lamp, whereby making it possible to ensure activation of the high-pressure discharge lamp.

According to the fourth aspect of the present invention, even if reactivation is difficult due to a high temperature of an arc tube arranged in the high-pressure discharge lamp, a cooling period can be established for the high-pressure discharge lamp, whereby making it possible to ensure reactivation of the high-pressure discharge lamp.

According to the fifth aspect of the present invention, the abnormality detection means detects a non-lighting state of a high-pressure discharge lamp, whereby safety can be enhanced in a continuous abnormal lighting state observed at the life end stage or the like of the high-pressure discharge lamp.

According to the sixth aspect of the present invention, generation of abnormal discharge can be prevented by stopping a repeated high-voltage pulse for activation at the life end stage of a high-pressure discharge lamp, whereby safety can be enhanced.

According to the seventh aspect of the present invention, if the activation voltage applied to a high-pressure discharge lamp fluctuates in activating the high-pressure discharge lamp, the high pressure discharge lamp lighting device changes a ratio of time occupied by a period of time to stop repeating a high-voltage pulse for activation (second period of time) relative to a period of time to repeat a high-voltage pulse for activation (first period of time), whereby activation of the high-pressure discharge lamp can be made easier.

According to the eighth aspect of the present invention, if the activation voltage applied to a high-pressure discharge lamp fluctuates in activating the high-pressure discharge lamp, the high pressure discharge lamp lighting device changes a ratio of time occupied by a period of time to stop repeating a high-voltage pulse for activation (second period of time) relative to a period of time to repeat a high-voltage pulse for activation (first period of time), whereby activation of the high-pressure discharge lamp can be The invention is defined in claim 1. Preferred embodiments are defined in the dependent claims.

### [Brief Description of the Drawings]

Fig. 1 is a circuit diagram showing a high pressure discharge lamp lighting device according to the invention.
Fig. 2 is a time chart to explain an operation of the high pressure discharge lamp lighting device according to the invention.
Fig. 3 is a flowchart to explain an operation of the high pressure discharge lamp lighting device according to the invention.
Fig. 4 is a time chart to explain an operation of a high pressure discharge lamp lighting device according to a background art embodiment (second example).
Fig. 5 is a flowchart to explain an operation of the high pressure discharge lamp lighting device according to the background art embodiment (second example).
Fig. 6 is a time chart to explain an operation of a high pressure discharge lamp lighting device according to a background art embodiment (third example).
Fig. 7 is a time chart to explain an operation of a high pressure discharge lamp lighting device according to a background art embodiment (fourth example).
Fig. 8 is a flowchart to explain an operation of the high pressure discharge lamp lighting device according to the background art embodiment (fourth example).
Fig. 9 is a time chart to explain an operation of a modified example of the high pressure discharge lamp lighting device according to the background art embodiment (fourth example).
Fig. 10 is a time chart to explain an operation of a high pressure discharge lamp lighting device according to a background art embodiment (fifth example).
Fig. 11 is a flowchart to explain an operation of the high pressure discharge lamp lighting device according to the background art embodiment (fifth example).

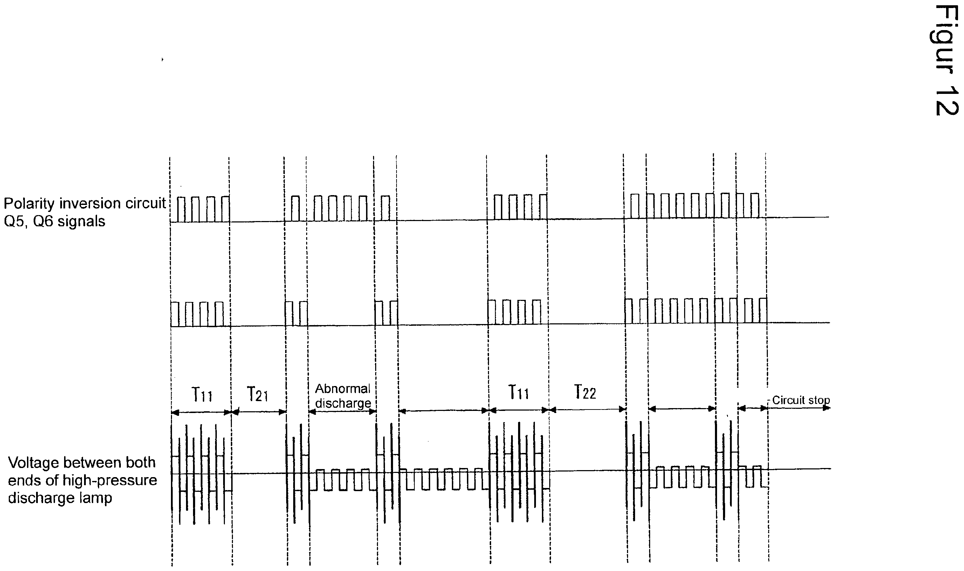

Fig. 12 is a time chart to explain an operation of a high pressure discharge lamp lighting device according to a background art embodiment (sixth example).
Fig. 13 is a flowchart to explain an operation of the high pressure discharge lamp lighting device according to the background art embodiment (sixth example).
Fig. 14 is an external view of an illumination fixture according to an inventive seventh embodiment.
Fig. 15 is an external view of a high-pressure discharge lamp.

### [Best Mode for Carrying Out the Invention]

### (First embodiment)

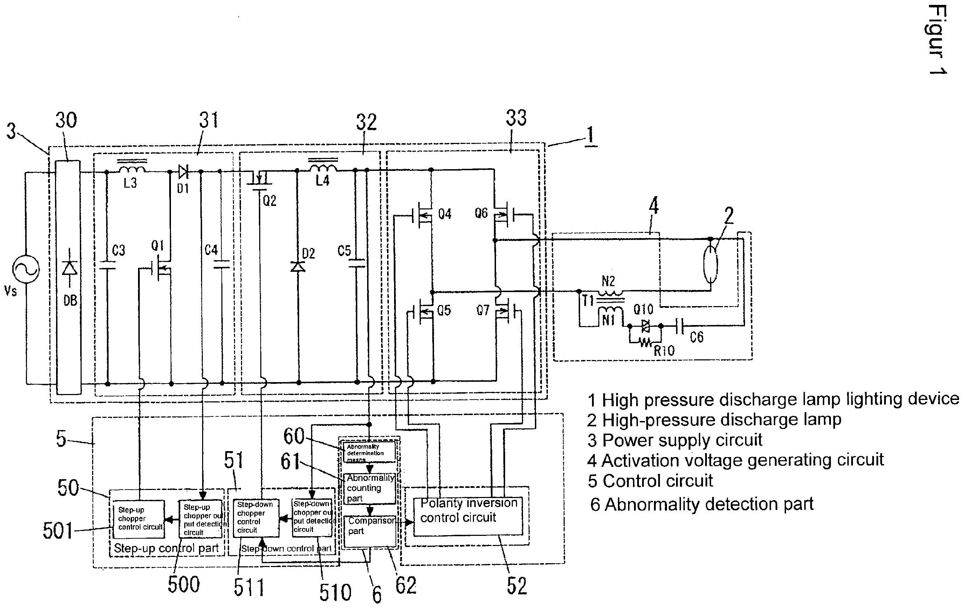

Explained first will be a circuit structure of a high pressure discharge lamp lighting device according to the invention. The high pressure discharge lamp lighting device 1 according to the present embodiment supplies power to a high-pressure discharge lamp 2 as shown in Fig. 1. This high pressure discharge lamp lighting device 1 includes a power supply circuit 3 for supplying AC power to the high-pressure discharge lamp 2, an activation voltage generating circuit 4 for activating the high-pressure discharge lamp 2 by repeatedly supplying a high-voltage pulse for activation to the high-pressure discharge lamp 2, a control circuit 5 for controlling power supply to the high-pressure discharge lamp 2, and an abnormality detection part (abnormality detection means) 6 for detecting an abnormal lighting state of the high-pressure discharge lamp 2.

The power supply circuit 3 includes a rectifier circuit 30 made of a diode bridge DB for rectifying an AC voltage outputted from a commercial power source Vs, a step-up chopper circuit 31 for outputting a DC voltage by boosting a voltage rectified in the diode bridge DB, a step-down chopper circuit 32 for supplying appropriate power to the high-pressure discharge lamp 2 by converting the DC voltage outputted from the step-up chopper circuit 31 into power, and a polarity inversion circuit 33 for supplying rectangular wave electric power to the high-pressure discharge lamp 2 by using a voltage outputted from the step-down chopper circuit 32 as a rectangular wave voltage.

The activation voltage generating circuit 4 is connected between an output side of the polarity inversion circuit 33 and the high-pressure discharge lamp 2, including a pulse transformer T1 with a secondary winding N2 connected in series to the high-pressure discharge lamp 2, a switching element Q10 of a voltage response type to be connected in series to a primary winding N1 of the pulse transformer T1 and turned on if a voltage between both ends thereof exceeds a predetermined value, a capacitor C6 connected in series to the primary winding N1 of the pulse transformer T1 and the switching element Q10, and a resistor R10 connected in parallel with the switching element Q10 so as to control a charge voltage for the capacitor C6 when the switching element Q10 is turned off.

The control circuit 5 includes a step-up control part 50 for controlling a switching element Q1 in accordance with a voltage outputted fro the step-up chopper circuit 31, a step-down control part 51 for controlling a switching element Q2 in accordance with a voltage outputted from the step-down chopper circuit 32 and a detection result of the abnormality detection part 6, and a polarity inversion control circuit 52 for controlling a switching operation performed by switching elements Q4 to Q7 in the polarity inversion circuit 33.

The step-up control part 50 includes a step-up chopper output detection circuit 500 for detecting a voltage outputted from the step-up chopper circuit 31, and a step-up chopper control circuit 501 for controlling the switching element Q1 in accordance with a detection result of the step-up chopper output detection circuit 500.

The step-down control part 51 includes a step-down chopper output detection circuit 510 for detecting a voltage outputted from the step-down chopper circuit 32, and a step-down chopper control circuit 511 for controlling the switching element Q2 in accordance with detection results of the abnormality detection part 6 and the step-down chopper output detection circuit 510.

The polarity inversion control circuit 52 controls the switching elements Q4 to Q7 to perform a switching operation so as to alternately repeat a first state of turning on the switching elements Q4 and Q7 and turning off the switching elements Q5 and Q6 and a second state of turning off the switching elements Q4 and Q7 and turning on the switching elements Q5 and Q6.

Owing to the above operation, the control circuit 5 alternately performs, at activation of the high-pressure discharge lamp 2, with respect to the activation voltage generating circuit 4, a first control to maintain a repeated high-voltage pulse for activation only for a first period of time and a second control to stop repeating a high-voltage pulse for activation only for a second period of time. The control circuit 5 corresponds to a pulse control means in the present invention.

The abnormality detection part 6 includes an abnormality determination means 60 for determining whether or not the high-pressure discharge lamp 2 is in an abnormal lighting state, an abnormality counting part 61 for measuring an abnormal period of time in response to a signal sent from the abnormality determination means 60, and a comparison part 62 for comparing the abnormal period of time to a predetermined period of time and transmitting a comparison result to the step-down chopper control circuit 511 and the polarity inversion control circuit 52. The abnormality detection part 6 detects an abnormal lighting state of the high-pressure discharge lamp 2 by detecting a non-lighting state of the high-pressure discharge lamp 2.

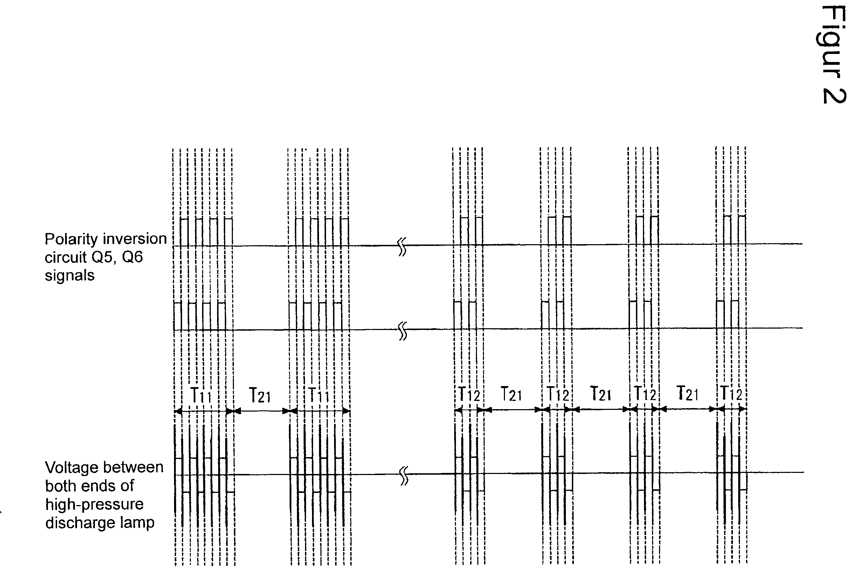

In the high pressure discharge lamp lighting device 1 structured as stated above, the switching elements Q4 to Q7 in the polarity inversion circuit 33 are controlled to perform a switching operation so as to repeat the first state and the second state alternately in a first period of time T11 shown in Fig. 2, whereby a high-voltage pulse for activation is generated in polarity inversion. After continuously repeating a high-voltage pulse for activation only for the first period of time T11, the entire switching elements Q4 to Q7 are turned off to stop repeating a high-voltage pulse for activation. After maintaining a state of stopping a high-voltage for activation only for a second period of time T21, the switching elements Q4 to Q7 are restarted to perform a switching operation, and a high-voltage pulse for activation is continuously repeated only for the first period of time T11. These operations are repeated to provide an intermittently repeated high-voltage pulse for activation.

Meanwhile, the high-pressure discharge lamp 2 is brought into an internal state with a high temperature/pressure immediately after lighting it out, wherein a dielectric breakdown voltage becomes extremely high. This state is substantially the same as an unloaded state with no connections of the high-pressure discharge lamp 2 when it is seen from the high pressure discharge lamp lighting device 1. The high pressure discharge lamp lighting device 1 is unable to easily distinguish and detect a state immediately after lighting out the high-pressure discharge lamp 2 and an unloaded state, whereby a high-voltage pulse for activation is generated even in an unloaded state. Moreover, even if an activation failure occurs due to, for example, the life end stage of the high-pressure discharge lamp 2, the high pressure discharge lamp lighting device 1 generates a high-voltage pulse for activation.

In a non-lighting state of the high-pressure discharge lamp 2, the step-down chopper circuit 32 outputs a DC voltage which is higher than a voltage used in a stable lighting of the high-pressure discharge lamp 2 in order to achieve a favorable activation of the high-pressure discharge lamp 2. The polarity inversion circuit 33 converts the DC voltage into a rectangular wave voltage which is outputted to the high-pressure discharge lamp 2 via the activation voltage generating circuit 4.

In the activation voltage generating circuit 4, the capacitor C6 is charged via the primary winding N1 of the pulse transformer T1 and the resistor R10. Applied to the switching element Q10 are a voltage outputted from the polarity inversion circuit 33 and a voltage (indicated by V1) between both ends of the capacitor C6. Since a voltage outputted from the polarity inversion circuit 33 is substantially the same as a voltage (indicated by V2) outputted from the step-down chopper circuit 32, a voltage applied to the switching element Q10 equals to |V2| - |V1| when the rectangular wave voltage is in a stable state, which means the voltage does not reach a voltage to turn on the switching element Q10. Accordingly, the switching element Q10 is not turned on and remains to be turned off.

On the other hand, a voltage between both ends of the capacitor C6 is not rapidly changed in polarity inversion of a rectangular wave voltage because it is charged via the resistor R10. Therefore, a voltage applied to the switching element Q10 equals to |V2| + |V1|, which means the voltage reaches a voltage to turn on the switching element Q10. Accordingly, the switching element Q10 is turned on.

As a result, an output capacitor C5 connected to an output end of the step-down chopper circuit 32 and the capacitor C6 are used as a power source to cause a steep pulse current to flow into the primary winding N1 of the pulse transformer T1, wherein a voltage obtained by multiplying a voltage generated in the primary winding N1 by times of winding is generated in the secondary winding and applied to the high-pressure discharge lamp 2. When the high-pressure discharge lamp 2 is activated, a voltage outputted from the step-down chopper circuit 32 is detected by the step-down chopper output detection circuit 510, and the detection result is received to control the step-down chopper circuit 32 so as to provide a predetermined current corresponding to the output voltage, followed by supplying appropriate rectangular wave electric power to the high-pressure discharge lamp 2 via the polarity inversion circuit 33, so that stable lighting of the high-pressure discharge lamp 2 is achieved.

Here, if the high-pressure discharge lamp 2 is went out due to some reasons, the abnormality determination means 60 detects an abnormal lighting state and determines the high-pressure discharge lamp 2 is lighted out, after which the activation voltage generating circuit 4 generates a high-voltage pulse for activation applied to the high-pressure discharge lamp 2 in order to immediately turn on the high-pressure discharge lamp 2 again.

Thereafter, if the abnormality detection part 6 detects an abnormal lighting state of the high-pressure discharge lamp 2 and a period of time during which the abnormal lighting state is observed reaching a set value established in advance, the control circuit 5 makes a ratio of time occupied by the second period of time relative to the first period of time larger than that obtained before the detection. At this time, the control circuit 5 makes the ratio of time larger than that obtained before the detection by making the first period of time shorter than before.

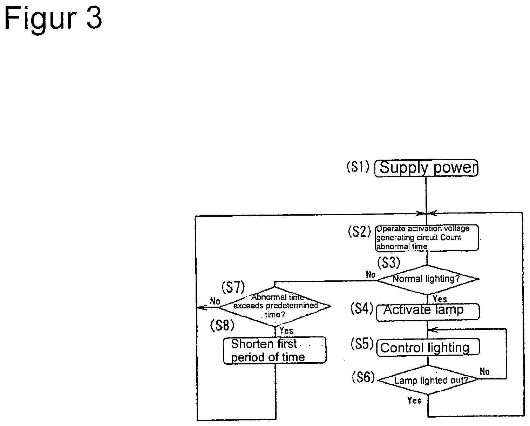

Explained next will be an operation of the high pressure discharge lamp lighting device 1 according to the present embodiment by using Fig. 3. Firstly, when the commercial power source Vs is supplied to the high pressure discharge lamp lighting device 1, the step-up chopper circuit 31 and the step-down chopper circuit 32 are turned on sequentially (step S1 in Fig. 3). The abnormality counting part 61 measures an abnormal period of time counted from a power supply from the commercial power source Vs (step S2).

A voltage outputted from the step-down chopper circuit 32 (voltage between both ends of the output capacitor C5) is converted into a rectangular wave voltage by the switching elements Q4 to Q7 so as to perform a polarity inversion operation in a range from several tens of Hz to several hundreds of Hz. In polarity inversion, the switching element 10 breaks over to cause a steep current to flow into the primary winding N1 of the pulse transformer T1. As a result, a high-voltage pulse for activation is generated in the secondary winding N2, followed by a dielectric breakdown in the high-pressure discharge lamp 2. Following next is determination of a lighting state of the high-pressure discharge lamp 2. More specifically, the abnormality determination means 60 detects a voltage outputted from the step-down chopper circuit 32, followed by determining the high-pressure discharge lamp 2 is in a lighting state if the output voltage is less than a threshold value or determining a non-lighting state of the high-pressure discharge lamp 2 if the output voltage is equal to or more than a threshold value (step S3).

If the high-pressure discharge lamp 2 is determined to be in a lighting state, the high-pressure discharge lamp 2 is activated (step S4) and a lighting control is performed (step S5). Thereafter, if the high-pressure discharge lamp 2 is lighted out and determined to be in a non-lighting state (step S6), reactivation starts (step S2).

In contrast, if the high-pressure discharge lamp 2 is determined to be in a non-lighting state, the comparison part 62 compares an abnormal period of time to a predetermined period of time established in advance (step S7), and if the abnormal period of time does not reach the predetermined period of time, the activation voltage generating circuit 4 repeats an activation operation again to apply a high-voltage pulse for activation to the high-pressure discharge lamp 2 (step S2).

Meanwhile, if the abnormal period of time reaches the predetermined period of time, the high-pressure discharge lamp 2 is determined to be in a difficult state to activate, followed by switching the first period of time T11 serving as a period of time to operate the activation voltage generating circuit 4 to T12 (T12 < T11) in order to cool down the high-pressure discharge lamp 2, whereby a period of time to repeat a high-voltage pulse for activation is shortened (step S8). After switching the first period of time T11 to T12, the activation voltage generating circuit 4 is operated again to continuously repeat a high-voltage pulse for activation only for the period of time T12 (step S2).

As stated above, according to the present embodiment, if an activation voltage (dielectric breakdown voltage) applied to the high-pressure discharge lamp 2 is high due to a high temperature of the high-pressure discharge lamp 2 in activating the high-pressure discharge lamp 2, or even if the high-pressure discharge lamp 2 has a high activation voltage, a ratio of time occupied by a period of time to stop repeating a high-voltage pulse for activation (second period of time) relative to a period of time to repeat a high-voltage pulse for activation (first period of time) is made larger to lower a temperature of the high-pressure discharge lamp 2 and realize a lower activation voltage, whereby the high-pressure discharge lamp 2 can be easily activated in comparison with the case observed before making the ratio of time larger.

Particularly because a period of time during which the high-pressure discharge lamp 2 generates heat can be shortened by making a period of time to repeat a high-voltage pulse for activation (first period of time) shorter and the temperature of the high-pressure discharge lamp 2 can be reduced in a short period of time as explained in the present embodiment, whereby the high-pressure discharge lamp 2 can be easily activated in a short period of time in comparison with the case observed before making the first period of time shorter.

The present embodiment also makes it possible to enhance safety by using the abnormality detection part 6 to detect a non-lighting state of the high-pressure discharge lamp 2 in a continuous abnormal lighting state associated with the life end stage or other states of the high-pressure discharge lamp 2.

Note that the present embodiment stops repeating of a high-voltage pulse for activation by stopping the polarity inversion circuit 33 instead of directly stopping the activation voltage generating circuit 4 to stop repeating of a high-voltage pulse for activation, wherein means adapted to stop a repeated high-voltage pulse for activation is not limited to the above means, and the activation voltage generating circuit 4, the step-up chopper circuit 31 and the step-down chopper circuit 32 or other components may also be stopped.

Moreover, as a modified example of the present embodiment, the abnormality counting part 61 may also count the number of times of abnormalities instead of measuring an abnormal period of time. In this case, the comparison part 62 compares the number of times of abnormalities to a predetermined number of times established in advance, and if the number of times of abnormalities reaches the predetermined number of times, the first period of time is made shorter to shorten a period of time to repeat a high-voltage pulse for activation. This case similarly applies to following embodiments.

### (Embodiment according to background art - second example)

A high pressure discharge lamp lighting device 1 according to a background art (second example) differs from the high pressure discharge lamp lighting device 1 according to the first embodiment in that a second period of time serving as a period to stop the activation voltage generating circuit 4 is extended instead of shortening a first period of time serving as a period to operate the activation voltage generating circuit 4 if an abnormal period of time reaches a predetermined period of time. Here, elements similar to the elements in the first embodiment are given the same reference numbers and explanation thereof will be omitted.

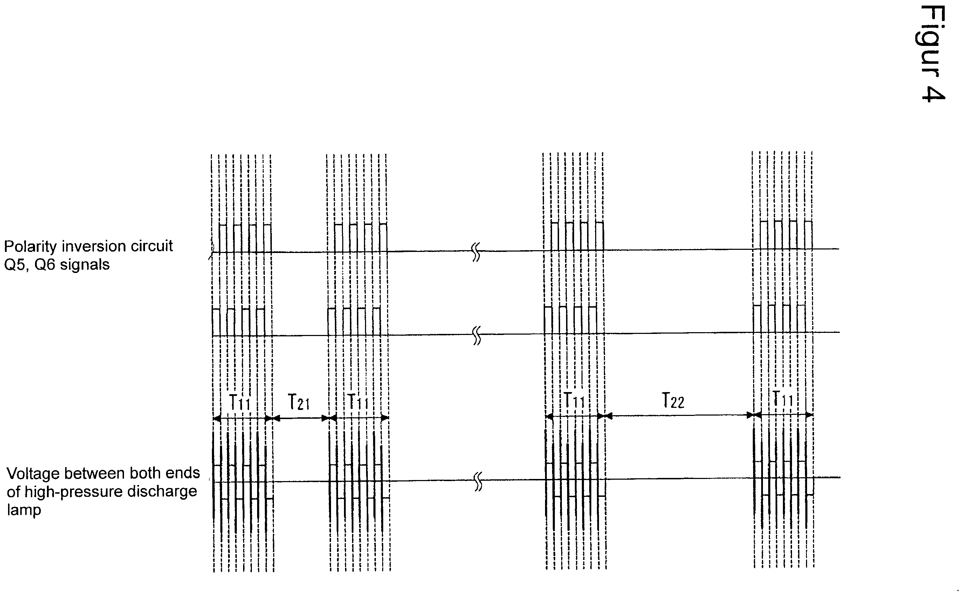

If a period of time during which an abnormal lighting state is observed reaches a predetermined period of time, the control circuit 5 according to the present background art embodiment makes a ratio of time (T22/T11) larger than that obtained before the detection (T21/T11) by switching the second period of time from T21 to T22 (T22 > T21) as shown in Fig. 4.

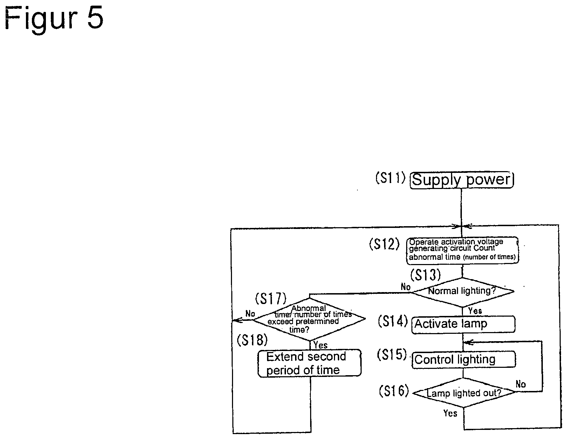

Explained next will be an operation of the high pressure discharge lamp lighting device 1 according to the present background art embodiment by using Fig. 5. First, when the commercial power source Vs is supplied to the high pressure discharge lamp lighting device 1, the step-up chopper circuit 31 and the step-down chopper circuit 32 are turned on sequentially in the same manner with the first embodiment (step S11 in Fig. 5), and the abnormality counting part 61 measures an abnormal period of time counted from a power supply from the DC power source Vs (step S12).

In the same manner with the first embodiment, the abnormality determination means 60 detects a voltage outputted from the step-down chopper circuit 32, followed by determining the high-pressure discharge lamp 2 is lighted on if the output voltage is less than a threshold value or determining a non-lighting state of the high-pressure discharge lamp 2 if the output voltage is equal to or more than a threshold value (step S13).

If the high-pressure discharge lamp 2 is determined to be lighted on, the high-pressure discharge lamp 2 is activated (step S14) and a lighting control is performed (step S15). Thereafter, if the high-pressure discharge lamp 2 is lighted out and determined to be in a non-lighting state (step S16), reactivation starts (step S12).

On the other hand, if the high-pressure discharge lamp 2 is determined to be in a non-lighting state, the comparison part 62 compares an abnormal period of time to a predetermined period of time (step S17), and if the abnormal period of time does not reach the predetermined period of time, the activation voltage generating circuit 4 repeats an activation operation again to apply a high-voltage pulse for activation to the high-pressure discharge lamp 2 (step S12).

On the contrary, if the abnormal period of time reaches the predetermined period of time, the high-pressure discharge lamp 2 is determined to be in a difficult state to activate, and the second period of time serving as a period to stop the activation voltage generating circuit 4 is switched from T21 to T 22 (T22 > T21) in order to cool down the high-pressure discharge lamp 2, so that a period of time to stop a high-voltage pulse for activation is extended (step S18). After switching the second period of time from T21 to T22, the activation voltage generating circuit 4 is operated again to extend a period of time to stop a high-voltage pulse for activation only for the period of time T22 (step S12).

As stated above, according to the present background art embodiment, a sufficient cooling period of time can be established for the high-pressure discharge lamp 2 by extending a period of time to stop repeating a high-voltage pulse for activation, whereby making it easier to activate the high-pressure discharge lamp 2 in a short period of time. That is, a period to cool down the high-pressure discharge lamp 2 is proactively increased so as to ensure activation of the high-pressure discharge lamp 2 having an unstable internal state in the arc tube 21.

### (Embodiment according to background art - third example)

Once the high-pressure discharge lamp 2 is lighted out after having been lighted on with a high temperature inside the arc tube 21, a high voltage is required for reactivation. A high-voltage pulse generated by the high pressure discharge lamp lighting device 1 according to the second example is approximately 5kV, and a voltage in this range requires approximately 5 minutes to activate the high-pressure discharge lamp 2 which is turned into a high temperature.

Therefore, if an abnormal period of time reaches a predetermined period of time, the high pressure discharge lamp lighting device 1 according to a background art embodiment (third example) extends the second period of time serving as a period to stop the activation voltage generating circuit 4, however it differs from the high pressure discharge lamp lighting device 1 according to the second example in that the second period of time to be extended is set longer than a period of time to reactivate the high-pressure discharge lamp 2. Here, elements similar to the elements in the second example are given the same reference numbers and explanation thereof will be omitted.

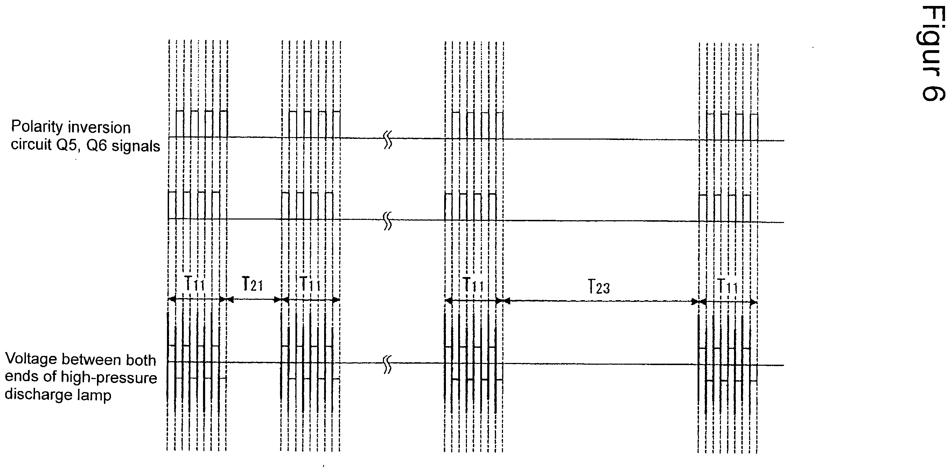

In other words, a second period of time T23 (refer to Fig. 6) obtained after changing a ratio of time occupied by the second period of time relative to the first period of time is longer than a period of time required to reactivate the high-pressure discharge lamp 2 which was lighted out after achieving a stable lighting of the high-pressure discharge lamp 2.

As stated above, according to the present background art embodiment, the second period of time is made longer than a period of time required to reactivate the high-pressure discharge lamp 2 which was lighted out after achieving stable lighting of the high-pressure discharge lamp 2, whereby the high-pressure discharge lamp 2 even with a high activation voltage can be sufficiently cooled down and an activation voltage applied to the high-pressure discharge lamp 2 can be made lower, so that activation of the high-pressure discharge lamp 2 can be ensured. The present background art embodiment also makes it possible to ensure activation of the high-pressure discharge lamp 2 having an unstable internal state in the arc tube 21 by proactively increasing a period to cool down the high-pressure discharge lamp 2.

### (Embodiment according to background art - fourth example)

As one example of abnormal discharge, there is so-called half-wave discharge in which equivalent impedance of the high-pressure discharge lamp 2 is unbalanced to cause an asymmetrical current flowing into the high-pressure discharge lamp 2 or an asymmetrical voltage generated between both ends of the high-pressure discharge lamp 2 with respect to positive/negative polarities of a rectangular wave voltage.

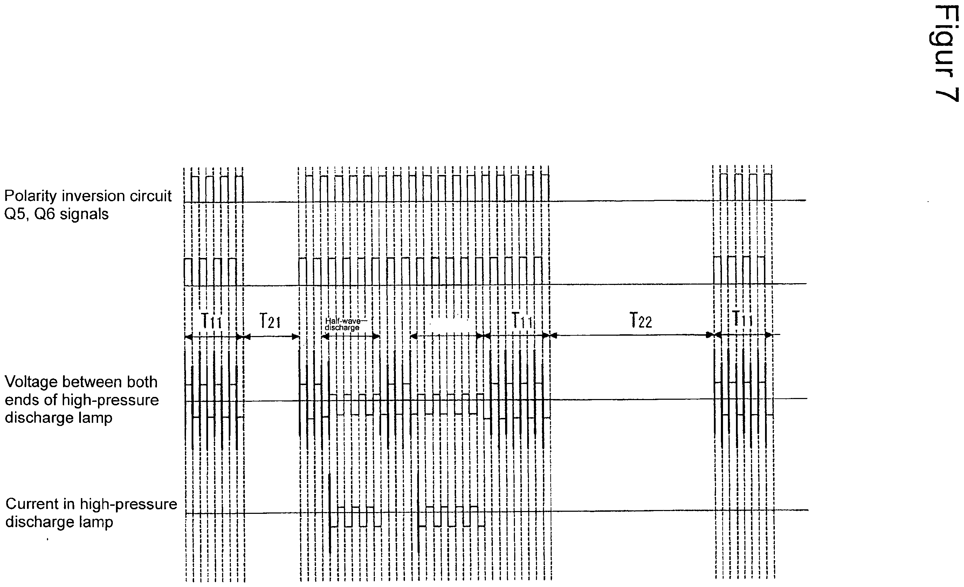

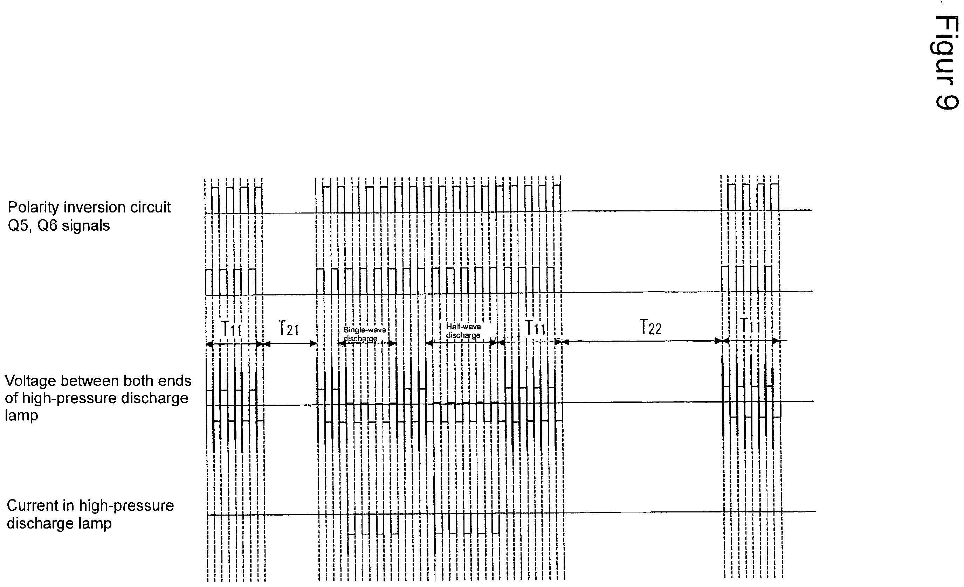

Half-wave discharge which often occurs intermittently as shown in Figs. 7 and 9 is a phenomenon frequently observed in a process to activate the high-pressure discharge lamp 2. An extreme example of half-wave discharge is, as shown in Fig. 9, wherein the high-pressure discharge lamp 2 is lighted on by one of polarities of a rectangular wave voltage whose other polarity turns the high-pressure discharge lamp 2 into a non-lighting state after polarity inversion. In general, half-wave discharge is easily sustained in an attempt to once again light on the high-pressure discharge lamp 2 which is lighted out after having been turned on for a short period of time.

The high pressure discharge lamp lighting device 1 according to the background art embodiment (fourth example) therefore differs from the high pressure discharge lamp lighting device 1 according to the first embodiment in terms of half-wave discharge being proposed as an abnormal state of the high-pressure discharge lamp 2 in place of an unloaded state. Here, elements similar to the elements in the first embodiment are given the same reference numbers and explanation thereof will be omitted.

The abnormality detection part 6 according to the present embodiment detects an abnormal lighting state of the high-pressure discharge lamp 2 by detecting half-wave discharge as shown in Fig. 7.

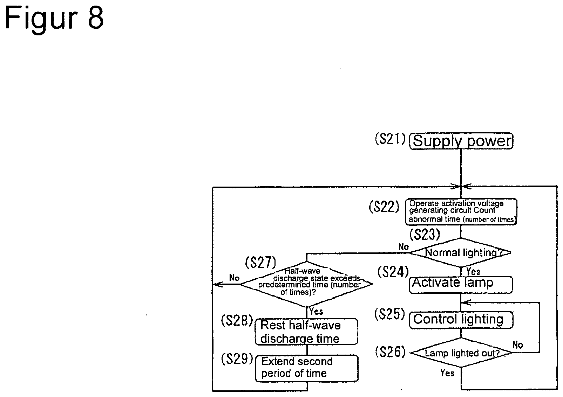

Explained next will be an operation of the high pressure discharge lamp lighting device 1 according to the present background art embodiment by using Fig. 8. Firstly, when the commercial power source Vs is supplied to the high pressure discharge lamp lighting device 1, the step-up chopper circuit 31 and the step-down chopper circuit 32 are turned on sequentially in the same manner with the background art embodiment of the second example (step S21 in Fig. 8), after which an activation voltage is generated and the abnormality counting part 61 measures a cumulative period of time for half-wave discharge (step S22).

After having an activation voltage generated, the abnormality determination means 60 detects a voltage outputted from the step-down chopper circuit 32 for each polarity, followed by determining normal discharge only when continuous bipolar voltages are both in a predetermined voltage range, and determining abnormal discharge in other cases (step S23).

If normal discharge is determined, the high-pressure discharge lamp 2 is activated (step S24) and a lighting control is performed (step S25). Thereafter, if the high-pressure discharge lamp 2 is lighted out and determined to be in a non-lighting state (step S26), reactivation starts (step S22).

In contrast, if abnormal discharge is determined, the abnormality counting part 61 measures a period of time for half-wave discharge and the comparison part 62 compares a cumulative period of time for the half-wave discharge to a predetermined period of time (step S27). If the cumulative period of time does not reach the predetermined period of time, the activation voltage generating circuit 4 repeats an activation operation again to apply a high-voltage pulse for activation to the high-pressure discharge lamp 2 (step S22).

Here, if abnormal discharge is accompanied by an unstable state, application of a high-voltage pulse for activation to the high-pressure discharge lamp 2 is stopped once, followed by applying a high-voltage pulse for activation after sufficiently cooling down the high-pressure discharge lamp 2, whereby making it easier to activate the high-pressure discharge lamp 2.

In the present background art embodiment, if the cumulative period of time for half-wave discharge reaches a predetermined period of time, the cumulative period of time for half-wave discharge is reset (step S28) to stop the activation voltage generating circuit 4 to operate once in order to cool down the high-pressure discharge lamp 2. A stopped period of time here (second period of time) is made longer than that in the above examples (step S29). Therefore, the high-pressure discharge lamp 2 is cooled down sufficiently and brought into a state to allow a discharge easily, followed by operating the activation voltage generating circuit 4 again to activate the high-pressure discharge lamp 2 (step S22).

As stated above, according to the present background art embodiment, even if half-wave discharge is continued in reactivating the high-pressure discharge lamp 2 which was lighted on for a short period of time, a cooling period can be provided for the high-pressure discharge lamp 2, whereby making it possible to ensure an activation of the high-pressure discharge lamp 2.

### (Embodiment according to background art - fifthexample)

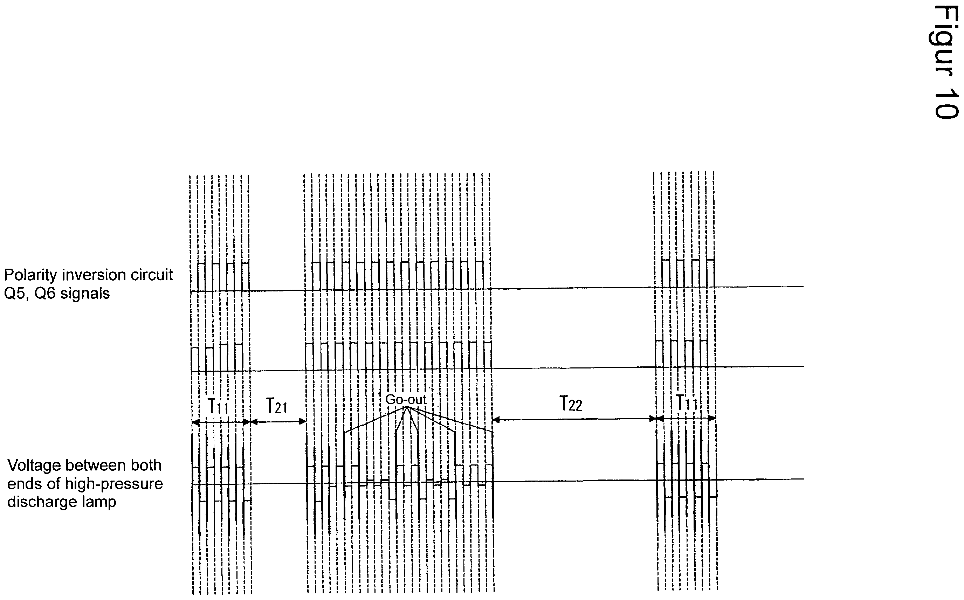

The high pressure discharge lamp lighting device 1 according to a background art embodiment (fifth example) differs from the high pressure discharge lamp lighting device 1 according to the first embodiment in that a state of repeatedly turning on and turning off the lighting as shown in Fig. 10 is proposed as an abnormal state of the high-pressure discharge lamp 2. Here, elements similar to the elements in the first embodiment are given the same reference numbers and explanation thereof will be omitted.

If the high-pressure discharge lamp 2 is turned on for a short period of time, so-called a go-out may be repeated in such that a lighting state in which the high-pressure discharge lamp 2 is lighted on by one polarity of the polarity inversion circuit 33 and maintained by a subsequent opposite polarity thereof is repeatedly brought into a non-lighting state by a further subsequent polarity thereof. Such a phenomenon is occasionally observed when the arc tube 21 has an unstable internal state due to the lighting in a short period of time or other causes.

The abnormality detection part 6 according to the present background art embodiment detects an abnormal lighting state of the high-pressure discharge lamp 2 by detecting a go-out state in which the high-pressure discharge lamp 2 is lighted out after having been turned on once.

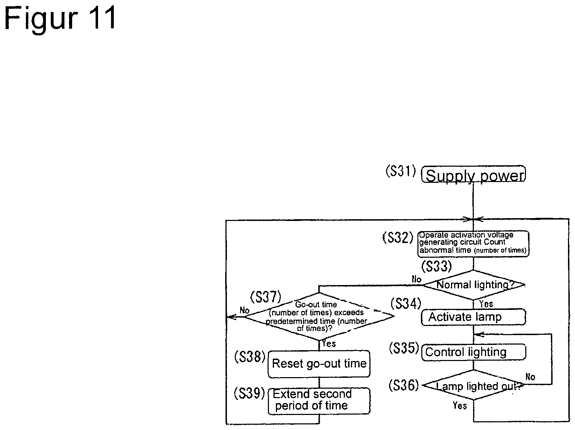

Explained next will be an operation of the high pressure discharge lamp lighting device 1 according to the present background art embodiment by using Fig. 11. Firstly, when the commercial power source Vs is supplied to the high pressure discharge lamp lighting device 1, the step-up chopper circuit 31 and the step-down chopper circuit 32 are lighted on sequentially in the same manner with the first embodiment (step S31 in Fig. 11), and the abnormality counting part 61 measures an abnormal period of time counted from a power supply to the commercial power source Vs (step S32).

The abnormality determination means 60 detects a voltage outputted from the step-down chopper circuit 32, and determines whether or not the lighting is went out (step S33).

If the lighting is not went out, the high-pressure discharge lamp 2 is activated (step S34) and a lighting control is performed (step S35). Thereafter, if the high-pressure discharge lamp 2 is went out and determined to be in a non-lighting state (step S36), reactivation starts (step S32).

On the other hand, if it is determined that the lighting is went out, the comparison part 62 compares a cumulative period of time for the went out to a predetermined period of time (step S37), and if the cumulative period of time does not reach the predetermined period of time, the activation voltage generating circuit 4 repeats an activation operation again to apply a high-voltage pulse for activation to the high-pressure discharge lamp 2 (step S32).

In contrast, if the cumulative period of time for the go-out state reaches the predetermined period of time, the cumulative period of time for the turn-off is reset (step S38) to stop the activation voltage generating circuit 4 to operate once in order to cool down the high-pressure discharge lamp 2. The stopped period of time here (second period of time) is made longer than before (step S39). Therefore, the high-pressure discharge lamp 2 is cooled down sufficiently and brought into a state to allow discharge easily, followed by operating the activation voltage generating circuit 4 again to reactivate the high-pressure discharge lamp 2 (step S32).

As stated above, according to the present background art embodiment, a go-out is detected and a cooling period is set so as to provide a cooling period for the high-pressure discharge lamp 2 even if the high-pressure discharge lamp 2 is in a difficult state to reactivate due to a high temperature of the arc tube 21, so that reactivation of the high-pressure discharge lamp 2 can be ensured.

### (Embodiment according to background art - sixthexample)

The high pressure discharge lamp lighting device 1 according to the background art embodiment sixth example differs from the high pressure discharge lamp lighting device 1 according to the first embodiment in that, if an abnormal lighting state is continued even after passing a predetermined period of time in a reactivated state of the high-pressure discharge lamp 2 realized by extending the second period of time and operating the activation voltage generating circuit 4 again, the high-pressure discharge lamp 2 is determined to be in a certain abnormal state such as the end of life or some other cases, followed by completely stopping the polarity inversion circuit 33 to operate. Here, elements similar to the elements in the first embodiment are given the same reference numbers and explanation thereof will be omitted.

If the abnormality detection part 6 detects an abnormal lighting state of the high-pressure discharge lamp 2 after making the ratio of time larger than that obtained before detection, the control circuit 5 controls the activation voltage generating circuit 4 so as to stop repeating a high-voltage pulse for activation.

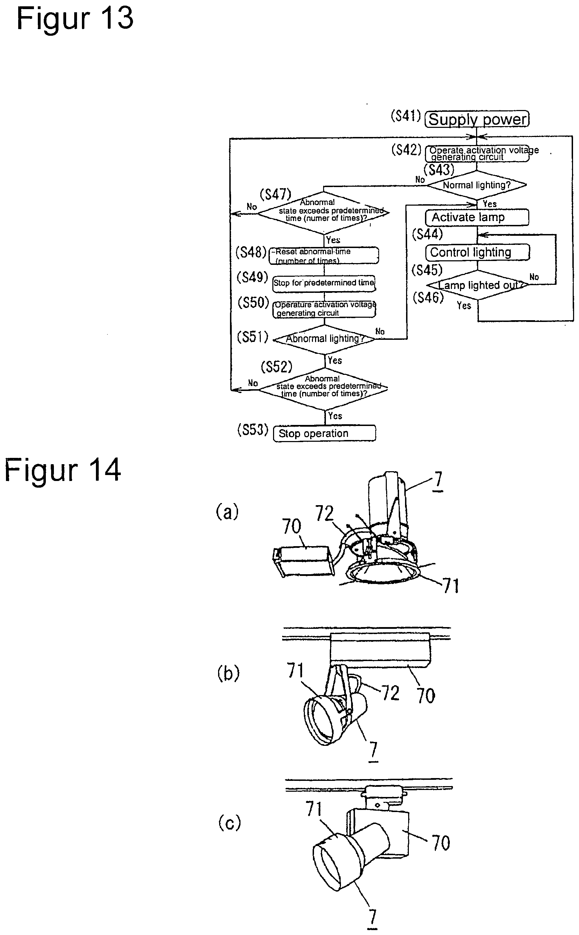

Explained next will be an operation of the high pressure discharge lamp lighting device 1 according to the present background art embodiment by using Fig. 13. Firstly, when the commercial power source Vs is supplied to the high pressure discharge lamp lighting device 1, the step-up chopper circuit 31 and the step-down chopper circuit 32 are lighted on sequentially in the same manner with the first embodiment (step S41 in Fig. 13), and the activation voltage generating circuit 4 is operated (step S42).

In the same manner with the first embodiment, the abnormality determination means 60 detects a voltage outputted from the step-down chopper circuit 32, followed by determining the high-pressure discharge lamp 2 is in a lighting state if the output voltage is less than a threshold value, or determining a non-lighting state of the high-pressure discharge lamp 2 if the output voltage is equal to or more than a threshold value (step S43).

If the high-pressure discharge lamp 2 is determined to be in a lighting state, the high-pressure discharge lamp 2 is activated (step S44) and a lighting control is performed (step S45). Thereafter, if the high-pressure discharge lamp 2 is lighted out and determined to be in a non-lighting state (step S46), reactivation starts (step S42).

On the other hand, if the high-pressure discharge lamp 2 is determined to be in a non-lighting state, the comparison part 62 compares an abnormal period of time to a predetermined period of time (step S47), and if the abnormal period of time does not reach the predetermined period of time, the activation voltage generating circuit 4 repeats an activation operation again to apply a high-voltage pulse for activation to the high-pressure discharge lamp 2 (step S42).

In contrast, if the abnormal period of time reaches the predetermined period of time, the high-pressure discharge lamp 2 is determined to be in a difficult state to activate, followed by resetting the abnormal period of time (step S48) to switch the second period of time serving as a period of time to stop the activation voltage generating circuit 4 from T21 to T22 (T22 > T21) in order to cool down the high-pressure discharge lamp 2, and extending a period of time to stop a high-voltage pulse for activation (step S49). After switching the second period of time from T21 to T22, the activation voltage generating circuit 4 is operated again to extend a period of time to stop a high-voltage pulse for activation only for the period of time T22 (step S50).

Thereafter, the abnormality determination means 60 detects a voltage outputted from the step-down chopper circuit 32, and determines whether or not the high-pressure discharge lamp 2 is lighted on abnormally (step S51). If the high-pressure discharge lamp 2 is lighted on normally, the high-pressure discharge lamp 2 is activated (step S44).

In contrast, in abnormal lighting of the high-pressure discharge lamp 2, the comparison part 62 compares an abnormal period of time to a predetermined period of time (step S52), and if the abnormal period of time does not reach the predetermined period of time, the activation voltage generating circuit 4 repeats an activation operation again to apply a high-voltage pulse for activation to the high-pressure discharge lamp 2 (step S42). On the contrary, if the abnormal period of time reaches the predetermined period of time, the activation voltage generating circuit 4 is stopped to operate (step S53).

As stated above, according to the present background art embodiment, generation of abnormal discharge can be prevented by stopping a repeated high-voltage pulse for activation at the life end stage of the high-pressure discharge lamp 2, whereby safety can be enhanced. That is, the present background art embodiment makes it possible to stop a circuit safely at the life end stage of the high-pressure discharge lamp 2 or in other cases.

### (Seventh embodiment)

Explained in a seventh embodiment will be an illumination fixture 7 including the high pressure discharge lamp lighting device 1 according to the first to sixth embodiments by using Fig. 14. Fig. 14 shows configuration examples of the illumination fixture 7 according to the present embodiment, including a downlight in Fig. 14A and spotlights in Figs. 14B and 14C.

The illumination fixture 7 shown in Fig. 14 includes the high-pressure discharge lamp 2 with power supplied from the high pressure discharge lamp lighting device 1, an electronic ballast 70 for storing a circuit of the high pressure discharge lamp lighting device 1, a fixture main body 71 for mounting the high pressure discharge lamp lighting device 1, and a cable 72 for connecting between the high pressure discharge lamp lighting device 1 and the high-pressure discharge lamp 2.

An illumination system is also constructed by a plurality of the illumination fixtures 7 and a control device (not shown in the drawing) for controlling these illumination fixtures 7. An illumination system may also be constructed by these illumination fixtures 7 in combination with an illumination sensor, a human sensor and a dimmer for outputting a lighting control signal in accordance with a manual output from a dimming control operation part.

### [Description of Reference Numerals]

1. High pressure discharge lamp lighting device
2. High-pressure discharge lamp
3. Power supply circuit
33. Polarity inversion circuit
4. Activation voltage generating circuit
5. Control circuit (control means)
52. Polarity inversion control circuit
6. Abnormality detection part (abnormality detection means)
60. Abnormality determination means
61. Abnormality counting part
62. Comparison part
7. Illumination fixture
71. Fixture main body

In the drawing:
Fig. 1
   1) High pressure discharge lamp lighting device
   2) High-pressure discharge lamp
   3) Power supply circuit
   4) Activation voltage generating circuit
   5) Control circuit
   6) Abnormality detection part
   7) Step-up chopper control circuit
   8) Step-up chopper output detection circuit
   9) Step-down chopper control circuit
   10) Step-down chopper output detection circuit
   11) Abnormality determination means
   12) Abnormality counting part
   13) Comparison part
   14) Polarity inversion control circuit
   15) Step-up control part
   16) Step-down control part
Fig. 2
   1) Polarity inversion circuit
      Q5, Q6 signals
   2) Voltage between both ends of high-pressure discharge lamp
Fig. 3
   1) Supply power
   2) Operate activation voltage generating circuit Count abnormal time
   3) Normal lighting?
   4) Activate lamp
   5) Control lighting
   6) Lamp lighted out?
   7) Abnormal time exceeds predetermined time?
   8) Shorten first period of time
Fig. 4
   1) Polarity inversion circuit
      Q5, Q6 signals
   2) Voltage between both ends of high-pressure discharge lamp
Fig. 5
   1) Supply power
   2) Operate activation voltage generating circuit
      Count abnormal time (number of times)
   3) Normal lighting?
   4) Activate lamp
   5) Control lighting
   6) Lamp lighted out?
   7) Abnormal time/ number of times exceed predetermined time?
   8) Extend second period of time
Fig. 6
   1) Polarity inversion circuit
      Q5, Q6 signals
   2) Voltage between both ends of high-pressure discharge lamp
Fig. 7
   1) Polarity inversion circuit
      Q5, Q6 signals
   2) Voltage between both ends of high-pressure discharge lamp
   3) Current in high-pressure discharge lamp
   4) Half-wave discharge
Fig. 8
   1) Supply power
   2) Operate activation voltage generating circuit Count abnormal time (number of times)
   3) Normal lighting?
   4) Activate lamp
   5) Control lighting
   6) Lamp lighted out?
   7) Half-wave discharge state exceeds predetermined time (number of times)?
   8) Reset half-wave discharge time
   9) Extend second period of time
Fig. 9
   1) Polarity inversion circuit
      Q5, Q6 signals
   2) Voltage between both ends of high-pressure discharge lamp
   3) Current in high-pressure discharge lamp
   4) Single-wave discharge
   5) Half-wave discharge
Fig. 10
   1) Polarity inversion circuit
      Q5, Q6 signals
   2) Voltage between both ends of high-pressure discharge lamp
   3) Go-out
Fig. 11
   1) Supply power
   2) Operate activation voltage generating circuit
      Count abnormal time (number of times)
   3) Normal lighting?
   4) Activate lamp
   5) Control lighting
   6) Lamp lighted out?
   7) Go-out time (number of times) exceeds predetermined time (number of times)?
   8) Reset go-out time
   9) Extend second period of time
Fig. 12
   1) Polarity inversion circuit
      Q5, Q6 signals
   2) Voltage between both ends of high-pressure discharge lamp
   3) Abnormal discharge
   4) Circuit stop
Fig. 13
   1) Supply power
   2) Operate activation voltage generating circuit
   3) Normal lighting?
   4) Activate lamp
   5) Control lighting
   6) Lamp lighted out?
   7) Abnormal state exceeds predetermined time (number of times)?
   8) Reset abnormal time (number of times)
   9) Stop for predetermined time
   10) Operate activation voltage generating circuit
   11) Abnormal lighting?
   12) Abnormal state exceeds predetermined time (number of times)?
   13) Stop operation

## Claims

1. A high pressure discharge lamp lighting device (1) comprising:
a power supply circuit (3) for supplying AC power to a high-pressure discharge lamp (2);
an activation voltage generating circuit (4) adapted to activate the high-pressure discharge lamp (2) by repeatedly supplying a high-voltage pulse for activation to the high-pressure discharge lamp (2);
pulse control means (5) adapted to alternatively perform, at activation of the high-pressure discharge lamp (2), with respect to the activation voltage generating circuit (4), a control to continuously repeat the high-voltage pulse for activation only for a first period of time (T11) and a control to stop repeating the high-voltage pulse for activation only for a second period of time (T21), such that a sequence of the first period of time (T11) followed by the second period of time (T21) is repeated; and
abnormality detection means (6) adapted to detect an abnormal lighting state of the high-pressure discharge lamp (2), **characterized in that**
upon detection of an abnormal lighting state of the high-pressure discharge lamp (2) by the abnormality detection means (6) with determination that a circumstance of having the abnormal lighting state corresponds to a predetermined circumstance the pulse control means (5) is adapted to change a ratio of time occupied by the second period of time (T21, T22) relative to the first period of time (T11, T12) in the repeated sequence of the first period of time (T11, T12) followed by the second period of time (T21, T22),
wherein the pulse control means (5) is adapted to make the ratio of time larger than that obtained before the detection by making the first period of time (T12) shorter than that obtained before the detection upon determination that a circumstance of having the abnormal lighting state corresponds to the predetermined circumstance.

2. The high pressure discharge lamp lighting device (1) according to claim 1, wherein the second period of time (T22) obtained after changing the ratio of time is longer than a period of time required to reactivate the high-pressure discharge lamp (2) in a lighted out state after achieving a stable lighting of the high-pressure discharge lamp (2).

3. The high pressure discharge lamp lighting device (1) according to any one of claims 1 or 2, wherein the abnormality detection means (6) is adapted to detect an abnormal lighting state of the high-pressure discharge lamp (2) by detecting a half-wave discharge.

4. The high pressure discharge lamp lighting device according to any one of claims 1 or 2, wherein the abnormality detection means (6) is adapted to detect an abnormal lighting state of the high-pressure discharge lamp (2) by detecting a go-out state with the lighting out after once achieving a lighting state of the high-pressured discharge lamp (2).

5. The high pressure discharge lamp lighting device (1) according to any one of claims 1 or 2, wherein the abnormality detection means (6) is adapted to detect an abnormal lighting state of the high-pressure discharge lamp (2) by detecting a non-lighting state of the high-pressure discharge lamp (2).

6. The high pressure discharge lamp lighting device (1) according to any one of claims 1 to 5, wherein the pulse control means (5) is adapted to stop the activation voltage generating circuit (4) to repeat the high-voltage pulse for activation upon detection of an abnormal lighting state of the high-pressure discharge lamp (2) by the abnormality detection means (6) after making the ratio of time larger than that obtained before the detection.

7. An illumination fixture (7) comprising:
the high pressure discharge lamp lighting device (1) according to any one of claims 1 to 6;
a fixture main body (71) for mounting the high pressure discharge lamp lighting device t(1) hereon; and
a high-pressure discharge lamp (2) with power supplied from the high pressure discharge lamp lighting device (1).

8. An illumination system comprising:
a plurality of the illumination fixtures (7) according to claim 7; and
a control device for controlling each of the illumination fixtures (7).

## Patentansprüche

1. Hochdruckentladungslampenbeleuchtungseinrichtung (1) aufweisend:
einen Leistungsversorgungsschaltkreis (3) für das Bereitstellen von AC-Leistung für eine Hochdruckentladungslampe (2) ;
einen Aktivierungsspannungserzeugungsschaltkreis (4), der dazu eingerichtet ist, die Hochdruckentladungslampe (2) durch das wiederholte Bereitstellen eines Hochspannungsimpulses zur Aktivierung an der Hochdruckentladungslampe (2) zu aktivieren;
ein Impulssteuermittel (5), das dazu eingerichtet sind, bei der Aktivierung der Hochdruckentladungslampe (2) in Bezug auf den Aktivierungsspannungserzeugungsschaltkreis (4) abwechselnd eine Steuerung für das kontinuierliche Wiederholen des Hochspannungsimpulses zur Aktivierung nur für eine erste Zeitperiode (T11) und eine Steuerung für das Stoppen der Wiederholung des Hochspannungsimpulses zur Aktivierung nur für eine zweite Zeitperiode (T21) auszuführen, so dass eine Sequenz der ersten Zeitperiode (T11) gefolgt von der zweiten Zeitperiode (T21) wiederholt wird; und
ein Anomaliedetektionsmittel (6), das eingerichtet sind, um einen anomalen Leuchtzustand der Hochdruckentladungslampe (2) zu detektieren, **dadurch gekennzeichnet, dass**
auf das Detektieren eines anomalen Leuchtzustandes der Hochdruckentladungslampe (2) durch das Anomaliedetektionsmittel (6) mit der Ermittlung, dass ein Umstand des Vorhandenseins des anomalen Leuchtzustandes einem vorherbestimmten Umstand entspricht, das Impulssteuermittel (5) eingerichtet ist, um ein Verhältnis der Zeitdauer zu ändern, das durch die zweite Zeitperiode (T21, T22) gegenüber der ersten Zeitperiode (T11, T12) in der wiederholten Sequenz aus der ersten Zeitperiode (T11, T12) gefolgt von der zweiten Zeitperiode (T21, T22) eingenommen wird,
wobei das Impulssteuermittel (5) dazu eingerichtet ist, das Verhältnis der Zeitdauer größer zu machen als das vor der Detektion, indem die erste Zeitperiode (T12) kürzer gemacht wird als die, die vor der Detektion erhalten wurde, sobald ermittelt wurde, dass ein Umstand des Vorhandenseins des anomalen Leuchtzustandes dem vorherbestimmten Umstand entspricht.

2. Hochdruckentladungslampenbeleuchtungseinrichtung (1) nach Anspruch 1, wobei die zweite Zeitperiode (T22), die nach dem Ändern des Verhältnisses der Zeitdauer erhalten wurde, länger ist als die Zeitperiode, die erforderlich ist, um die Hochdruckentladungslampe (2) in einem erloschenen Zustand zu reaktivieren, nach dem Erreichen eines stabilen Leuchtens der Hochdruckentladungslampe (2).

3. Hochdruckentladungslampenbeleuchtungseinrichtung (1) nach irgendeinem der Ansprüche 1 oder 2, wobei das Anomaliedetektionsmittel (6) eingerichtet ist, um einen anomalen Leuchtzustand der Hochdruckentladungslampe (2) zu detektieren durch das Detektieren einer Halbwellenentladung.

4. Hochdruckentladungslampenbeleuchtungseinrichtung (1) nach irgendeinem der Ansprüche 1 oder 2, wobei das Anomalie-detektionsmittel (6) eingerichtet ist, um einen anomalen Leuchtzustand der Hochdruckentladungslampe (2) zu detektieren durch das Detektieren eines Erlöschungszustandes beim Erlöschen nachdem einmal ein leuchtender Zustand der Hochdruckentladungslampe (2) erreicht wurde.

5. Hochdruckentladungslampenbeleuchtungseinrichtung (1) nach irgendeinem der Ansprüche 1 oder 2, wobei das Anomaliedetektionsmittel (6) eingerichtet ist, um einen anomalen Leuchtzustand der Hochdruckentladungslampe (2) zu detektieren durch das Detektieren eines nicht leuchtenden Zustandes der Hochdruckentladungslampe (2).

6. Hochdruckentladungslampenbeleuchtungseinrichtung (1) nach irgendeinem der Ansprüche 1 bis 5, wobei das Impulssteuermittel (5) eingerichtet ist, um den Aktivierungsspannungserzeugungsschaltkreis (4) zu stoppen, den Hochspannungsimpuls zur Aktivierung zu wiederholen, sobald ein anomaler Leuchtzustand der Hochdruckentladungslampe (2) durch das Anomaliedetektionsmittel (6) detektiert wurde, nachdem das Verhältnis der Zeitdauer größer gemacht wurde als das, dass vor der Detektion erhalten wurde.

7. Beleuchtungsvorrichtung (7) aufweisend:
die Hochdruckentladungslampenbeleuchtungseinrichtung (1) nach irgendeinem der Ansprüche 1 bis 6;
einen Vorrichtungshauptkörper (71) zum Anbringen der Hochdruckentladungslampenbeleuchtungseinrichtung (1) daran; und
eine Hochdruckentladungslampe (2), der eine Leistung von der Hochdruckentladungslampenbeleuchtungseinrichtung (1) zugeführt wird.

8. Beleuchtungssystem aufweisend:
eine Mehrzahl von Beleuchtungsvorrichtungen (7) nach Anspruch 7; und
eine Steuereinrichtung zum Steuern von jeder der Beleuchtungsvorrichtungen (7).

## Revendications

1. Dispositif d'éclairage de lampe à décharge haute pression (1), comprenant ;
un circuit d'alimentation électrique (3), destiné à fournir du courant CA à une lampe à décharge haute pression (2) ;
un circuit générateur de tension d'activation (4), adapté pour activer la lampe à décharge haute pression (2) en fournissant de manière répétée une impulsion haute tension, permettant d'activer la lampe à décharge haute pression (2) ;
un moyen de commande d'impulsion (5), adapté pour exécuter alternativement, lors de l'activation de la lampe à décharge haute pression (2), par rapport au circuit générateur de tension d'activation (4), une commande, visant à répéter en permanence l'impulsion haute tension, pour une activation uniquement pendant un premier laps de temps (T11) et une commande, visant à cesser de répéter l'impulsion haute tension, pour une activation uniquement pendant un second laps de temps (T21), de sorte qu'une séquence du premier laps de temps (T11), suivi par le second laps de temps (T21), est répétée et
un moyen de détection d'anomalie (6), adapté pour détecter un état d'éclairage anormal de la lampe à décharge haute pression (2),
**caractérisé en ce que**,
lors de la détection d'un état d'éclairage anormal de la lampe à décharge haute pression (2) par le moyen de détection d'anomalie (6), avec la détermination qui veut qu'une circonstance, dotée de l'état d'éclairage anormal, correspond à une circonstance prédéterminée, qui veut que le moyen de commande d'impulsion (5) est adapté pour modifier un rapport de temps, occupé par le second laps de temps (T21, T22), par rapport au premier laps de temps (T11, T12), dans la séquence répétée du premier laps de temps (T11, T12), suivi par le second laps de temps (T21, T22),
dans lequel le moyen de commande d'impulsion (5) est adapté pour rendre le rapport de temps plus grand que celui obtenu avant la détection, en rendant le premier laps de temps (T12) plus court que celui obtenu avant la détection, lors de la détermination qui veut qu'une circonstance, dotée de l'état d'éclairage anormal, correspond à la circonstance prédéterminée.

2. Dispositif d'éclairage de lampe à décharge haute pression (1) selon la revendication 1, dans lequel le second laps de temps (T22), obtenu après avoir changé le rapport de temps, est plus long qu'un laps de temps, nécessaire pour réactiver la lampe à décharge haute pression (2) dans un état d'extinction, après avoir réalisé un éclairage stable de la lampe à décharge haute pression (2).

3. Dispositif d'éclairage de lampe à décharge haute pression (1) selon l'une quelconque des revendications 1 ou 2, dans lequel le moyen de détection d'anomalie (6) est adapté pour détecter un état d'éclairage anormal de la lampe à décharge haute pression (2), en détectant une décharge de demi-onde.

4. Dispositif d'éclairage de lampe à décharge haute pression selon l'une quelconque des revendications 1 ou 2, dans lequel le moyen de détection d'anomalie (6) est adapté pour détecter un état d'éclairage anormal de la lampe à décharge haute pression (2), en détectant un état de sortie avec l'éclairage éteint, après avoir réalisé une fois un état d'éclairage de la lampe à décharge haute pression (2).

5. Dispositif d'éclairage de lampe à décharge haute pression (1) selon l'une quelconque des revendications 1 ou 2, dans lequel le moyen de détection d'anomalie (6) est adapté pour détecter un état d'éclairage anormal de la lampe à décharge haute pression (2), en détectant un état non éclairé de la lampe à décharge haute pression (2).

6. Dispositif d'éclairage de lampe à décharge haute pression (1) selon l'une quelconque des revendications 1 à 5, dans lequel le moyen de commande d'impulsion (5) est adapté pour que le circuit générateur de tension d'activation (4) cesse de répéter l'impulsion haute tension, pour une activation lors de la détection d'un état d'éclairage anormal de la lampe à décharge haute pression (2) par le moyen de détection d'anomalie (6), après avoir rendu le rapport de temps plus grand que celui obtenu avant la détection.

7. Appareil d'éclairage (7), comprenant :
le dispositif d'éclairage de lampe à décharge haute pression (1) selon l'une quelconque des revendications 1 à 6 ;
un corps principal d'appareil (71), destiné à y monter le dispositif d'éclairage de lampe à décharge haute pression t(1) et
une lampe à décharge haute pression (2), avec de la puissance fournie par le dispositif d'éclairage de lampe à décharge haute pression (1).

8. Système d'éclairage, comprenant :
une pluralité d'appareils d'éclairage (7), selon la revendication 7 et
un dispositif de commande, destiné à commander chacun des appareils d'éclairage (7).
